# EUROPÄISCHE PATENTSCHRIFT

(11) **EP 3 645 204 B1**
(45) Veröffentlichungstag und Bekanntmachung des Hinweises auf die Patenterteilung: **26.01.2022**
(21) Anmeldenummer: 18733246.5
(22) Anmeldetag: 20.06.2018
(51) Int. Cl.: B23K 20/10, H01R 4/02, H01R 43/02, B23K 101/32, B23K 101/38

(54) **VERFAHREN UND ANORDNUNG ZUM ELEKTRISCH LEITENDEN VERBINDEN VON LEITERN MIT EINER RÜCKHALTEEINRICHTUNG**
METHOD AND ARRANGEMENT FOR ELECTRICALLY CONDUCTIVE CONNECTING OF CONDUCTORS WITH A RETAINING DEVICE
PROCÉDÉ ET ENSEMBLE SERVANT À RACCORDER DE MANIÈRE ÉLECTROCONDUCTRICE DES CONDUCTEURS À UN DISPOSITIF DE MAINTIEN

(30) Priorität: 27.06.2017 DE 102017114182
(43) Veröffentlichungstag der Anmeldung: 06.05.2020
(73) Patentinhaber: Schunk Sonosystems GmbH, 35435 Wettenberg (DE)
(72) Erfinder: SCHMIDT, Reiner, 35457 Lollar-Ruttershausen (DE); WAGENBACH, Udo, 38418 Buseck (DE); GILBERT, Bastian, 35452 Heuchelheim (DE)
(74) Vertreter: Stoffregen, Hans-Herbert
(86) Internationale Anmeldenummer: PCT/EP2018/066470
(87) Internationale Veröffentlichungsnummer: WO 2019/002057

(56) Entgegenhaltungen:
- EP-A1- 2 981 389
- DE-A1-102010 060 767
- US-A1- 2007 000 890

## Beschreibung

Die Erfindung bezieht sich auf ein Verfahren zum elektrisch leitenden Verbinden von ersten elektrischen Leitern sowie vorzugsweise mit diesen verdrillten zweiten elektrischen Leitern in einem querschnittsmäßig, insbesondere in Höhe und Breite, veränderbaren zumindest von einem Seitenschieber, einer Sonotrode und einer Gegenelektrode begrenzten Verdichtungsraum mittels Ultraschallschweißens, wobei zunächst blanke Enden der ersten elektrischen Leiter in den Verdichtungsraum eingebracht und mittels Ultraschalleinwirkung zu einer ersten Verbindung geschweißt werden und sodann nach Entfernen der ersten Verbindung aus dem Verdichtungsraum in diesen blanke Enden der zweiten elektrischen Leiter eingebracht und mittels Ultraschalleinwirkung zu einer zweiten Verbindung geschweißt werden.

Ferner nimmt die Erfindung Bezug auf eine Anordnung zum stoffschlüssigen Verbinden erster Leiter sowie zweiter Leiter, die insbesondere miteinander verdrillt sind, mittels Ultraschall, umfassend einen von zumindest einem Seitenschieber, einer Sonotrode und einer Gegenelektrode begrenzten Verdichtungsraum, der vorzugsweise während des Schweißens von einem insbesondere schallisolierenden Gehäuse umgeben ist.

Um elektrische Leiter stoffschlüssig zu verbinden, kann das Ultraschallschweißen zur Anwendung gelangen. Dabei wird die zum Schweißen benötigte Energie in Form von mechanischen Schwingungen in das Schweißgut eingebracht. Hierzu wird eine Sonotrode in ihrer Längsrichtung in Ultraschallschwingung versetzt. Gleichzeitig erfolgt eine Relativbewegung zu einer der Sonotrode zugeordneten Gegenelektrode - auch Amboss genannt -, um eine erforderliche statische Schweißkraft aufzubringen. Zwischen Gegenelektrode und Sonotrode sind die zu fügenden Werkstoffe angeordnet. Beim Ultraschallmetallschweißen werden die mechanischen Schwingungen parallel zu der der von dem Amboss aufgespannten Ebene eingebracht. Dabei kommt es zu einer komplexen Beziehung zwischen der zwischen Sonotrode und Gegenelektrode wirkenden statischen Kraft, den oszillierenden Scherkräften und einem Temperaturanstieg in der Fügezone. Typische Frequenzen beim Ultraschallmetallschweißen liegen zwischen 20 kHz und 40 kHz, wobei üblicherweise die Arbeitsfrequenz im Bereich von 20 kHz liegt.

Insbesondere in der Kommunikationstechnik, aber auch z.B. bei Kabelbäumen in Kraftfahrzeugen werden verdrillte Leitungen eingesetzt, um eine gegenseitige Beeinflussung der einzelnen gegeneinander isolierenden elektrischen Leiter oder Kabel zu reduzieren. Verbindungen zwischen Abschnitten einzelner Leiter oder Kabel können mittels Ultraschallmetallschweißens erfolgen, wobei die hergestellten Verbindungen auch als Durchgangsknoten bezeichnet werden.

Um die elektrische Beeinflussung der Durchgangsknoten aufweisenden Leitern so gering wie möglich zu halten, sollte auch im Bereich der Durchgangsknoten soweit wie möglich eine Verdrillung vorliegen. Da jedoch die Durchgangsknoten nacheinander geschweißt werden müssen, um eine Behinderung des Schweißens durch bereits einen geschweißten Durchgangsknoten auszuschließen, muss dieser von dem Verdichtungsraum ferngehalten werden. Da beim Schweißen üblicherweise der Verdichtungsraum bzw. die diesen begrenzenden Komponenten von einer Schallschutzhaube umgeben sein müssen, erfolgt ein Entdrillen in einem Umfang, dass der bereits geschweißte Durchgangsknoten außerhalb der Schallschutzhaube verläuft. Dies erfordert jedoch im erheblichen Umfang ein Entdrillen der Leiter.

Aus der DE 10 2010 060 767 A1 (Basis für den Oberbegriff der Ansprüche 1 und 4) sind ein Verfahren und eine Vorrichtung zum Verschweißen von aus metallischen Litzen oder Adern bestehenden Leitungen zu einem End- oder Durchgangsknoten durch Einbringen von jeweils einem ersten Abschnitt jeder Leitung in einen Verdichtungsraum einer Ultraschallschweißvorrichtung mit einer Sonotrode und einer Gegenelektrode bekannt.

Der vorliegenden Erfindung liegt die Aufgabe zugrunde, ein Verfahren und eine Anordnung der eingangs genannten Art so weiterzubilden, dass auch im Bereich einer Verbindung zwischen den ersten Leitern sowie einer Verbindung zwischen den zweiten Leitern weitgehend eine Verdrillung ermöglicht wird.

Zur Lösung der Aufgabe wird verfahrensmäßig im Wesentlichen vorgeschlagen, dass vor dem Schweißen der zweiten Verbindung die erste Verbindung einer Rückhalteeinrichtung zugeführt wird, die sich im unmittelbaren Bereich des Verdichtungsraums befindet.

Mit anderen Worten wird erfindungsgemäß vorgeschlagen, dass die geschweißte erste Verbindung, also der erste Durchgangsknoten, von einer Rückhalteeinrichtung aufgenommen wird, die sich in unmittelbarer Nähe des Verdichtungsraums befindet. Hierdurch ist sichergestellt, dass ein Ent- oder Aufdrillen in geringem Umfang notwendig ist, um die Schweißung der Abschnitte des weiteren Leiters oder Kabels durchzuführen, ohne dass eine Behinderung erfolgt.

Selbstverständlich gilt die erfindungsgemäße Lehre auch für das Schweißen von mehr als zwei verdrillten Leitern, die zu jeder Seite des Verdichtungsraums verlaufen.

Die Rückhalteeinrichtung befindet sich dabei innerhalb des Schallschutzgehäuses, sofern ein solches vorhanden ist.

Insbesondere ist vorgesehen, dass die Rückhalteeinrichtung in oder an dem Seitenschieber, der Gegenelektrode oder im oder am Gehäuseinneren ausgebildet wird.

Es besteht die Möglichkeit, dass die Rückhalteeinrichtung von Abschnitten des Gehäuseinneren ausgeht oder eines das Gehäuse bodenseitig verschließenden Elementes wie Bodenplatte, von der mittelbar oder unmittelbar Bauelemente der Ultraschallschweißvorrichtung ausgehen.

Aufgrund der erfindungsgemäßen Lehre ist erreichbar, dass die Entdrilllänge zu beiden Seiten des Verdichtungsraums auf jeweils in etwa 30 mm bis 40 mm reduziert werden kann. Hierdurch ergibt sich erwähntermaßen der Vorteil, dass die gegenseitige Beeinflussung der elektrischen Leiter bzw. Kabel reduziert wird; denn je kürzer die Entdrilllänge ist, desto besser ist die elektromagnetische Verträglichkeit des Kabelsatzes hinsichtlich der Störanfälligkeit des gesamten Kabelbaums.

Eine Anordnung der eingangs genannten Art wird im Wesentlichen gekennzeichnet durch eine Rückhalteeinrichtung zur Aufnahme einer durch Schweißen blanker Enden der ersten Leiter hergestellten ersten Verbindung während des Schweißens blanker Enden der zweiten Leiter zu einer zweiten Verbindung, wobei die Rückhalteeinrichtung an dem Seitenschieber oder der Gegenelektrode oder bei Vorhandensein des Gehäuses in dessen Schweißverbindungsrückhalteeinrichtung an dem Seitenschieber oder der Gegenelektrode ausgebildet ist, oder bei Vorhandensein des Gehäuses von dessen Innerem oder von einem das Gehäuse bodenseitig verschließenden Element ausgeht, wobei die Schweißverbindungsrückhalteeinrichtung ausgebildet ist als zumindest ein Element aus der Gruppe Aussparung, Vorsprung, Bügel, Haken, Klemmeinrichtung, Greifelement, Feder, Niederhalter.

Die Schweißverbindungsrückhalteeinrichtung wird nachstehend als Rückhalteinrichtung bezeichnet.

Auch kann die Erfindung vorsehen, dass in zur Bodenfläche des Verdichtungsraums fernliegender Oberseite des Schiebers eine Aussparung als Rückhalteeinrichtung ausgebildet ist. Insbesondere weist die Aussparung in senkrecht zu den Verdichtungsraum begrenzender Stirnfläche des Seitenschiebers verlaufendem Schnitt eine Geometrie in Form eines Dreiecks, insbesondere ungleichschenkligen Dreiecks, eines Rechtecks, eines Kreisabschnitts, insbesondere eines Halbkreises, oder eine oder mehrere Kombinationen dieser auf. Auch kann die Aussparung als Hinterschnitt ausgebildet sein.

Alternativ oder ergänzend kann über der Oberseite des Seitenschiebers ein im Schnitt rechteckförmiger oder L-förmiger Vorsprung als die Rückhaltevorrichtung vorstehen, der insbesondere verdichtungsraumseitig bündig in die den Verdichtungsraum begrenzende Stirnfläche des Seitenschiebers übergeht.

Es besteht jedoch auch die Möglichkeit, in dem Seitenschieber zugewandter Stirnfläche der Gegenelektrode eine Aussparung auszubilden oder von der Stirnfläche einen Vorsprung als die Rückhalteeinrichtung ausgehen zu lassen. Dabei ist insbesondere vorgesehen, dass der Vorsprung verdichtungsraumseitig bündig in die den Verdichtungsraum begrenzende Fläche der Gegenelektrode als Abschnitt dieser übergeht.

Die Rückhalteeinrichtung kann jedoch auch von dem Gehäuse bzw. einem Abschnitt von diesem ausgehen. Das Gehäuse kann zum Beispiel einen stationären ersten Abschnitt und einen zu diesem verstellbaren und beim Schweißen vorzugsweise an diesem anliegenden zweiten Abschnitt umfassen, wobei von dem ersten oder zweiten Abschnitt zumindest ein insbesondere hakenförmiger Vorsprung ausgeht, der die Rückhalteeinrichtung bildet. Insbesondere ist jedoch vorgesehen, dass von dem ersten oder zweiten Abschnitt des Gehäuses zwei zueinander beabstandete Rückhaltevorrichtungen wie Vorsprünge ausgehen, die sich auf gegenüberliegenden Seiten des Verdichtungsraums erstrecken.

Selbstverständlich kann eine Rückhalteeinrichtung auch von der Basis ausgehen, die die Bauelemente der Ultraschallschweißeinrichtung aufnehmen und die bodenseitig das Schallschutzgehäuse verschließen.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: eine Prinzipdarstellung einer Ultraschallmetallschweißanordnung,
- Fig. 2: eine Prinzipdarstellung eines Verdichtungsraums einer Ultraschallmetallschweißvorrichtung,
- Fig. 3a-3f: Prinzipdarstellungen von Ausführungsformen von Seitenschiebern,
- Fig. 4a, 4b: weitere Ausgestaltungen von Seitenschiebern,
- Fig. 5: eine Ultraschallschweißvorrichtung mit Schallschutzgehäuse,
- Fig. 6: eine Ultraschallschweißvorrichtung gemäß Fig. 5 mit einem anders gestalteten Schallschutzgehäuse,
- Fig. 7: die Anordnung gemäß Fig. 6, bei der erste Leiter von verdrillten Leitern verschweißt sind,
- Fig. 8: die Anordnung gemäß Fig. 6 und 7 mit geschlossenem Schallschutzgehäuse und
- Fig. 9 - 14: weitere Ausführungsformen von Rückhalteeinrichtungen.

Anhand der Figuren, in denen grundsätzlich gleiche Elemente mit gleichen Bezugszeichen versehen sind, wird die erfindungsgemäße Lehre erläutert, mit der einzelne Leiter bzw. Kabel, die miteinander verdrillt sind, verschweißt werden können, ohne dass im Bereich der Verbindungen ein Ent- oder Aufdrillen erfolgen muss, so dass eine gegenseitige Beeinflussung der elektrischen Leiter oder Kabel reduziert wird.

Dies ist im Bereich der Kommunikationstechnik, aber auch im Kraftfahrzeugbereich von besonderem Interesse. Die vermiedene gegenseitige Beeinflussung wirkt sich dabei insbesondere bei einem Kabelbaum eines Kraftfahrzeuges positiv aus, da die Störanfälligkeit des Kabelbaums reduziert wird.

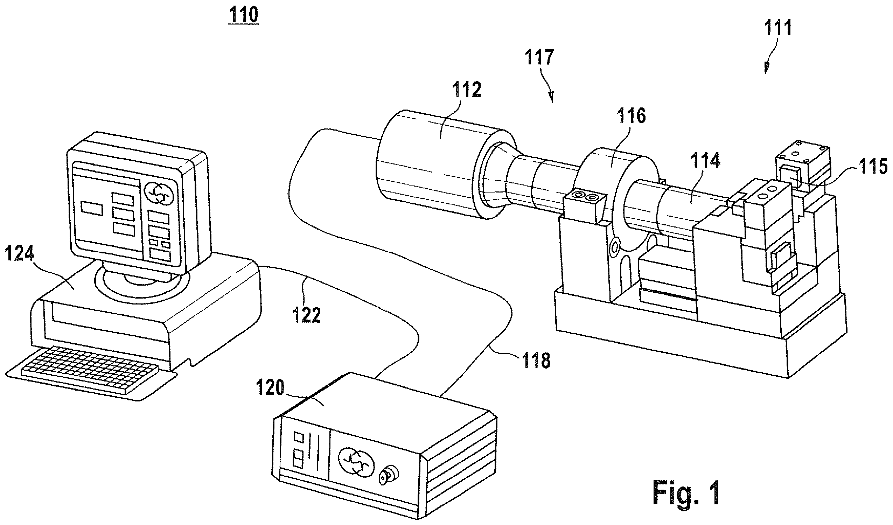

In Fig. 1 ist rein prinzipiell eine Ultraschallschweißanordnung 110 dargestellt, um wesentliche Elemente zu erläutern. Die Anordnung 110 umfasst eine Ultraschallmetallschweißvorrichtung 111, die zum Verschweißen von Leitern oder Kabeln bestimmt ist.

Die Ultraschallschweißanordnung 110 umfasst als wesentliche Elemente einen Konverter 112 und eine Sonotrode 114, zwischen denen ein Booster zur Amplitudenverstärkung angeordnet ist. Der Konverter 112, der Booster 116 und die Sonotrode 114 bilden einen sogenannten Ultraschallschwinger 117, der im Booster gelagert ist. Der Sonotrode 114, d.h. deren in Fig. 1 nicht erkennbarer Kopf mit Schweißfläche, ist eine auch als Amboss bezeichnete Gegenelektrode 115 zugeordnet, die zu dem Schwinger 117 absenkbar ist, um Kräfte beim Schweißen in die Fügezonen, im vorliegenden Fall zur Bildung von Durchgangsknoten von Leitern oder Kabeln, einzuleiten.

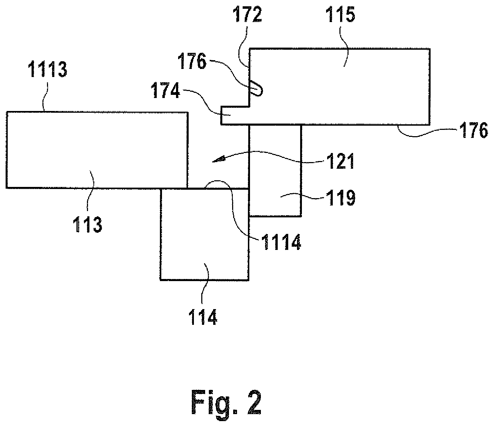

Der Amboss 115 ist von einer sogenannten Tuschierplatte 119 aufgenommen (s. Fig. 2), die senkrecht zur Schweißfläche 1114 der Sonotrode 114 verstellbar ist. Gegenüberliegend ist ein Seitenschieber 113 vorhanden, der mit dem Amboss 115, der Sonotrode 114 bzw. dessen Schweißfläche 1114 und der Tuschierplatte 119 einen in Höhe und Breite verstellbaren Verdichtungsraum 121 begrenzt.

Der Konverter 112 ist über eine Leitung 118 mit einem Generator 120 verbunden, der seinerseits über eine Leitung 122 an einem Rechner angeschlossen ist. Über den Generator 120 wird der Konverter 112, d.h. die in diesem angeordneten Piezokristallscheiben mit Hochfrequenzspannung beaufschlagt, um die Scheiben entsprechend zu dehnen bzw. zu kontrahieren, wodurch Ultraschallschwingungen mit einer Amplitude erzeugt werden, die vom Booster 116 verstärkt wird und auf die Sonotrode 114 übertragen werden.

Die Schwingungsfrequenz liegt typischerweise bei 20 kHz. Die Amplitude liegt üblicherweise zwischen 0,010 mm und 0,045 mm Halbwelle. Die beim Ultraschallschweißen auf die Kabel einwirkenden Kräfte, die vom Amboss 115 auf diese wirken, können zwischen 150 N und 3000 N liegen. Die Schweißfläche verläuft im Schwingungsbauch der Ultraschallschwingungen.

Ist anhand der Fig. 1 ein Längsschwinger erläutert worden, so wird die erfindungsgemäße Lehre auch nicht verlassen, wenn ein Torsionsschwinger zum Einsatz gelangt.

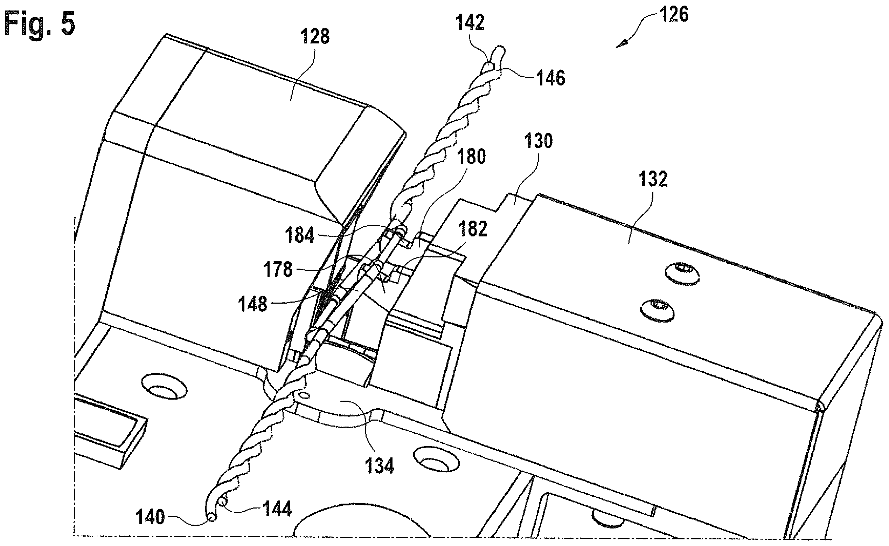

Die Ultraschallschweißvorrichtung 111 wird des Weiteren üblicherweise von einem Schallschutzgehäuse 126 umgeben, das beim Schweißen geschlossen wird. Rein beispielhaft ist ein solches der Fig. 5 zu entnehmen. Das Schallschutzgehäuse 126 besteht dabei aus einem stationären Abschnitt 128 und einem zu diesem verfahrbaren und beim Schweißen an diesem anliegenden Abschnitt 130, der seinerseits von einem Gehäuseteil 132 umgeben ist.

Bodenseitig wird das Gehäuse 126 von einer Grundplatte 134 verschlossen, von dem die Bauelemente bzw. Werkzeuge ausgehen bzw. gelagert werden, die u.a. für die Bildung des Verdichtungsraums 121 benötigt werden. Ein solcher ist rein prinzipiell der Fig. 2 zu entnehmen. Man erkennt die Sonotrode 114 mit Schweißfläche 1114, den Seitenschieber 113, den Amboss 115 und die Tuschierplatte 119, die den Verdichtungsraum 121 umgeben.

In den geöffneten Verdichtungsraum 121 werden die zu verschweißenden Leiter eingebracht, um sodann den Seitenschieber 113 in Richtung der Tuschierplatte 119 bis zur gewünschten Schweißbreite zu verfahren. Sodann wird der Amboss 115 in Richtung des Seitenschiebers 113 bei gleichzeitigem Absenken durch Verstellen der Tuschierplatte 119 bewegt, um sodann nach Kontaktieren der Leiter bei erregter Sonotrode 114 diese zu Schweißen. Insoweit wird auf hinreichend bekannte Techniken verwiesen.

Erfindungsgemäß werden erste Leiter 140, 142 untereinander und zweite Leiter 144, 146 untereinander nacheinander verschweißt. Dabei sind die ersten Leiter 140, 142 mit den zweiten Leitern 144, 146 verdrillt, wie dies den Fig. 5, 7 und 8 zu entnehmen ist.

Das Verschweißen der ersten Leiter 140, 142 erfolgt zunächst. Hierzu werden blanke Enden der ansonsten isolierten Leiter oder Kabel 140, 142 in den Verdichtungsraum 121 eingelegt, um sodann in zuvor beschriebener Art den Seitenschieber 113 auf die Schweißbreite zu verschieben, um anschließend durch Verstellen von Amboss 115 und Tuschierplatte 119 bei erregter Sonotrode 114 die Schweißung durchzuführen.

Die freien blanken Enden der zweiten Leiter 144, 146 werden beim Einlegen der blanken Enden der ersten Leiter 140, 142 so positioniert, dass diese in den Verdichtungsraum 121 nicht eindringen können.

Nach erfolgtem Schweißen der ersten Leiter 140, 142, also nach Herstellen einer als Durchgangsknoten zu bezeichnenden ersten Verbindung 148, werden die zweiten Leiter 144, 146 in den Verdichtungsraum 121 eingelegt. Dabei muss sichergestellt sein, dass der Durchgangsknoten 148 nicht in den Verdichtungsraum 121 gelangen kann.

Dies kann entweder dadurch erfolgen, dass die ersten und zweiten Leiter über eine längere Strecke entdrillt werden oder aber entsprechend der erfindungsgemäßen Lehre der Durchgangsknoten 148 auf eine Rückhalteeinrichtung gelegt oder eingehängt wird, die in der Ultraschallschweißvorrichtung 111 integriert ist, und zwar insbesondere innerhalb des Innenraums des Gehäuses 126.

Somit bedarf es nur im geringen Umfang eines Entdrillens unmittelbar in der Nähe des Durchgangsknotens 148. Folglich wird die Wirkung des Verdrillens im Wesentlichen beibehalten, nämlich das gegenseitige Beeinflussen der ersten Leiter 140, 142 zu den zweiten Leitern 144, 146 und umgekehrt unterbunden, ein Vorteil, der sich nicht nur in der Kommunikationstechnik, sondern insbesondere auch im Bereich der Kraftfahrzeugtechnik widerspiegelt.

Um den Durchgangsknoten 148 zu fixieren, so dass die Schweißung der blanken Enden der zweiten Leiter 144, 146 nicht gestört werden kann, sind verschiedene Möglichkeiten gegeben, wie dies anhand der Figuren erläutert wird.

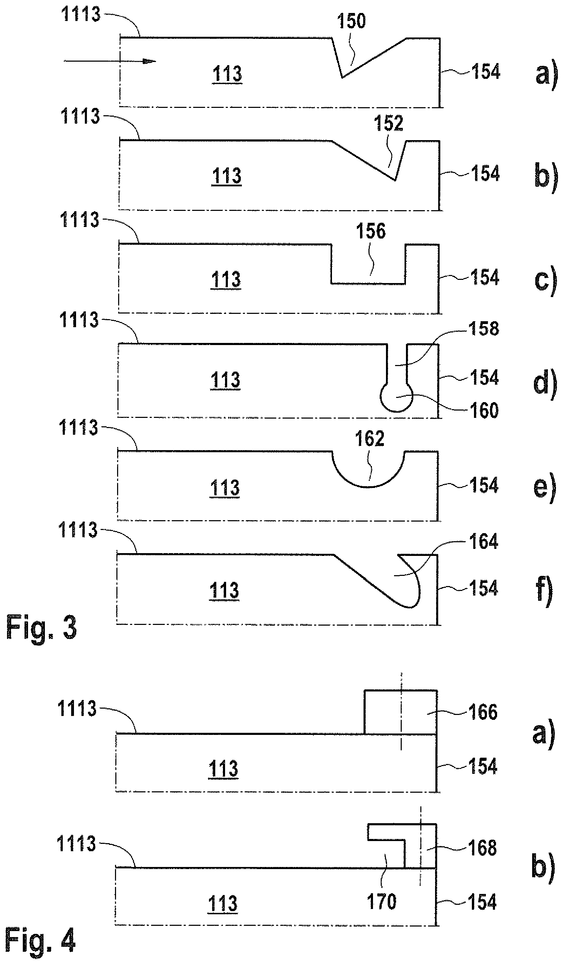

Eine bevorzugte Ausführungsform ist darin zu sehen, dass der Seitenschieber 113 durch Aussparungen und/oder Vorsprünge oder sonstige Hilfsmittel als Rückhalteeinrichtung wirkt. Dies sei anhand der Fig. 3 und 4 erläutert.

So weist nach dem Ausführungsbeispiel der Fig. 3a und 3b der Seitenschieber 113 auf seiner Oberseite 1113 eine im Schnitt ein schiefwinkliges Dreieck bildende Aussparung 150, 152 auf, deren kurzer Schenkel gemäß Fig. 3a fernliegend zur Stirnfläche 154 des Seitenschiebers 113 oder diesem zugewandt (Fig. 3b) verläuft.

Ungeachtet dessen ist durch die Vertiefung oder Aussparung 150, 152 sichergestellt, dass beim Einlegen des Durchgangsknotens 148 dieser beim Schweißvorgang fixiert ist. Die Aussparung bzw. Vertiefung 150, 152 verläuft über die gesamte Breite des Seitenschiebers 113.

Nach dem Ausführungsbeispiel der Fig. 3c ist eine parallel zur Stirnfläche 154 verlaufende im Schnitt rechteckförmige Aussparung 156 als Rückhalteeinrichtung vorgesehen.

In Fig. 3d verläuft von der Oberseite 1113 ausgehend und parallel zu der Stirnfläche 154 ein Schlitz 158, der in eine im Schnitt kreisförmige Erweiterung 160 übergeht, die als Rückhalteeinrichtung dient.

Nach dem Ausführungsbeispiel der Fig. 3e geht von der Oberseite 1113 des Seitenschiebers 113 eine rinnenförmige Vertiefung 162 aus, die sich über die gesamte Breite des Schiebers 113 erstreckt und im Ausführungsbeispiel die Geometrie eines Halbkreises aufweist. Eine weitere Möglichkeit, in dem Seitenschieber 113 eine Rückhalteeinrichtung auszubilden, ist durch einen Hinterschnitt 164 gegeben (Fig. 3f).

Die Funktion einer Rückhalteeinrichtung wird jedoch auch durch von der Oberseite 1113 ausgehende Vorsprünge 166 bzw. 168 erzielt (Fig. 4a, b). Der Vorsprung 166, der nicht zwingend über die gesamte Breite des Schiebers 113 verlaufen muss, weist im Schnitt eine Rechteckgoemetrie und nach der Fig. 4b den eines L auf, so dass sich ein Freiraum 170 abgewandt von der Stirnfläche 154 ergibt, in den der Durchgangsknoten 148 einleg- bzw. einhängbar ist.

Eine Rückhalteeinrichtung kann jedoch auch im Amboss ausgebildet werden. Dies wird anhand der Fig. 2 verdeutlicht. So kann von der schieberseitig verlaufenden Stirnfläche 172 des Ambosses 115 ein Vorsprung 174 ausgehen, so dass sich zwischen der Stirnfläche 172 und dem Vorsprung 174 eine Stufe bildet, auf die der Durchgangsknoten 148 legbar ist. Um den Schweißprozess nicht zu beeinflussen, geht der Vorsprung 174 sonotrodenseitig bündig in die Unterseite 176 des Ambosses 115 über, die abschnittsweise den Verdichtungsraum 121 begrenzt.

Mit anderen Worten ist der Vorsprung 174 Abschnitt des Ambosses 115 bzw. der Druckfläche selbst. Anstelle eines Vorsprungs kann in der Stirnfläche 172 z.B. eine Aussparung 176 vorgesehen sein, in die die erste Verbindung bzw. Durchgangsknoten 148 während des Schweißens der blanken Enden der zweiten Leiter 144, 146 eingehängt wird.

Es besteht jedoch gemäß der Fig. 5 auch die Möglichkeit, dass eine Rückhalteeinrichtung von dem verstellbaren Gehäuseabschnitt 130 ausgeht. Im Ausführungsbeispiel gehen von dem Gehäuseabschnitt 130 Stege oder Schenkel 178, 180 aus, die hakenförmig ausgebildete Oberseiten 182, 184 aufweisen, in die die erste Verbindung bzw. der Durchgangsknoten 148 während des Schweißens der zweiten Leiter 144, 146 eingelegt wird. Die Schenkel 180 verlaufen dabei seitlich des Seitenschiebers 113 und damit des Verdichtungsraums 121.

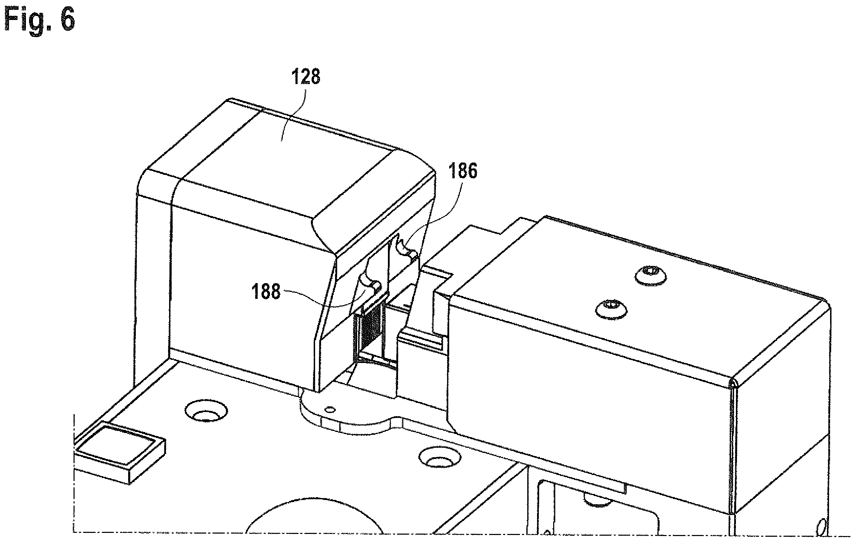

Nach dem Ausführungsbeispiel der Fig. 6 bis 8 gehen von dem stationären Gehäuseabschnitt 128 hakenförmige Vorsprünge 186, 188 aus, die als Rückhalteeinrichtung dienen. Die Vorsprünge 186, 188 weisen einen lichten Abstand auf, der sicherstellt, dass das Verstellen des Seitenschiebers 113 nicht behindert werden kann.

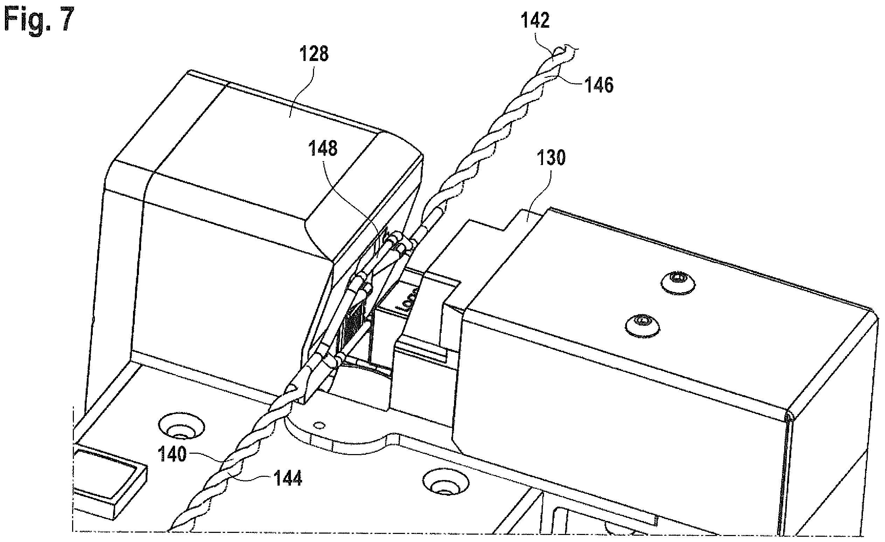

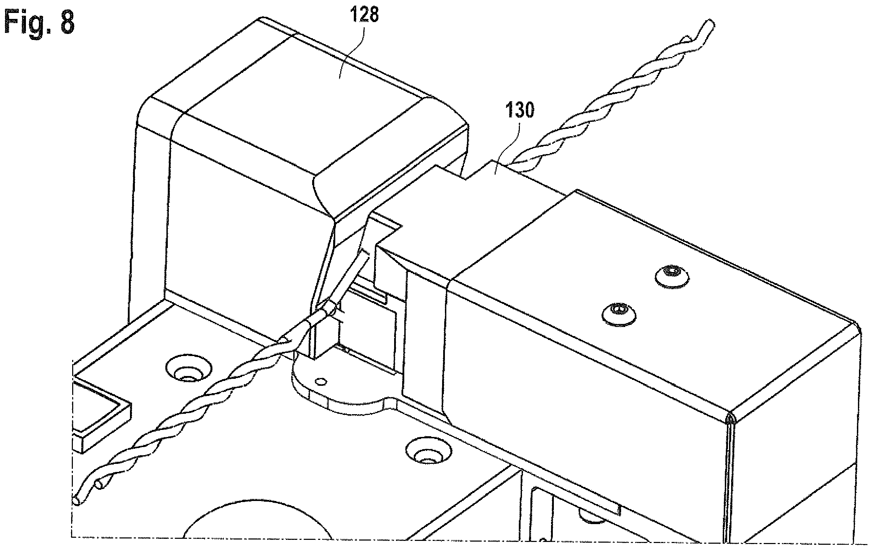

In Fig. 6 ist das geöffnete Gehäuse dargestellt. In Fig. 7 erfolgte bereits die Schweißung der blanken Enden der ersten Leiter 140, 142. Die hergestellte erste Verbindung, also der erste Durchgangsknoten 148 wird auf die hakenförmigen Abschnitte 186, 188 gelegt, um sodann die blanken Enden der zweiten Leiter 144, 146 schweißen zu können. Beim Schweißen selbst ist das Gehäuse 126 geschlossen, wie sich dies aus der Fig. 8 ergibt. Dabei liegt eine Stirnfläche des verstellbaren Abschnitts 130 an einer geometrisch angepassten Fläche des Gehäuseabschnitts 128 an.

Damit ungeachtet dessen die ersten und zweiten Leiter 140, 142 bzw. 144, 146 aus dem Gehäuse 126 herausgeführt werden können, weist insbesondere der verstellbare Abschnitt 130 stirnrandseitig ein entsprechendes, vorzugsweise aus Schaumstoff bestehendes nachgiebiges Material auf, wie sich aus der Fig. 8 ergibt.

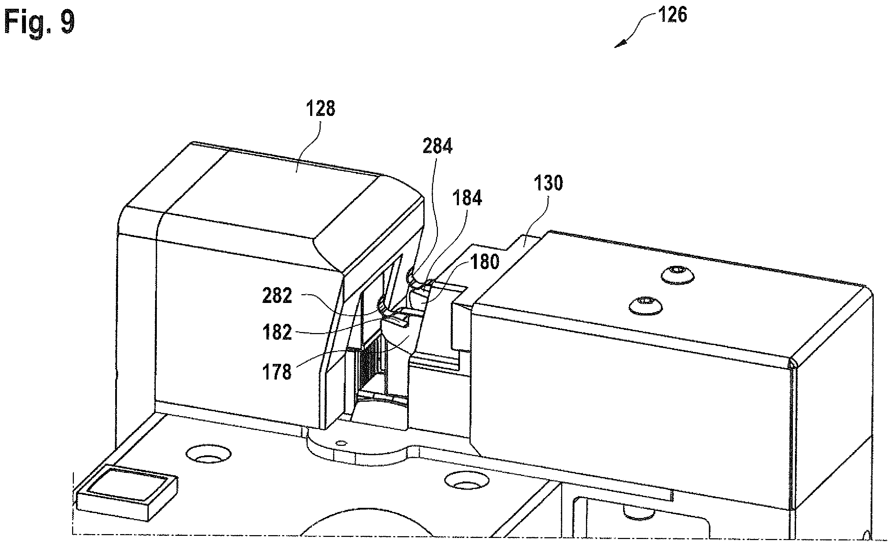

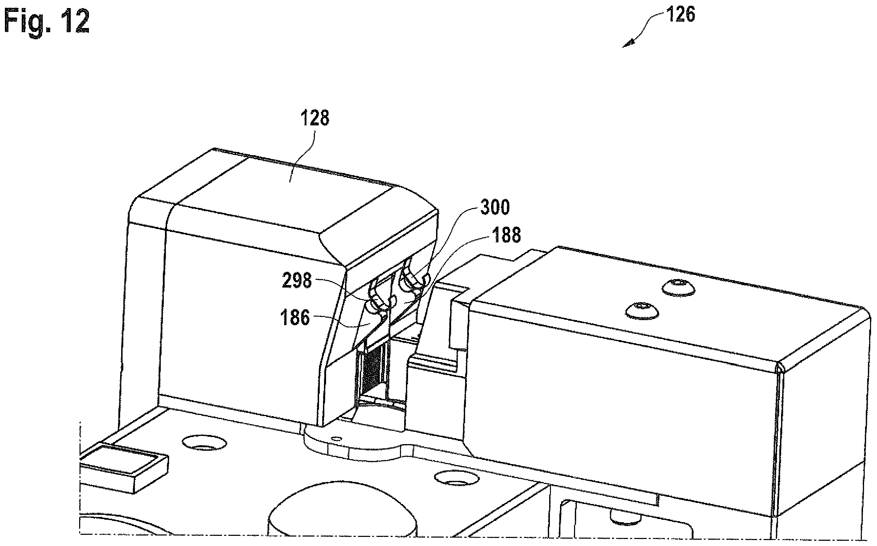

Den Fig. 9 bis 14 sind weitere Ausführungsformen von Rückhalteeinrichtungen zu entnehmen. Diese beziehen sich dabei auf diejenigen, die von dem Gehäuse 126 bzw. den Abschnitten 128, 130 ausgehen. Dem Grunde nach handelt es sich um Ausgestaltungen der Rückhalteeinrichtungen 178, 180, 182, 184 des verstellbaren Abschnitts 130 bzw. der Rückhalteeinrichtungen 186, 188 des stationären Abschnitts 128.

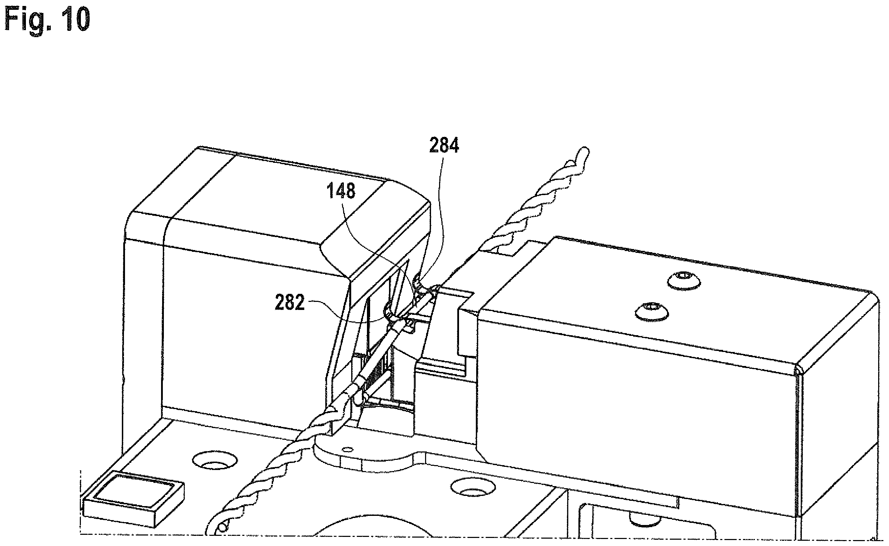

In den Fig. 9 und 10 erstreckt sich entlang der hakenförmigen Oberseiten 182, 184 jeweils ein federartiges Element 282, 284, zwischen dem und der Oberseite 182, 184 des Schenkels 178, 180 die erste Verbindung 148 klemmbar ist, wie sich dies aus der Fig. 10 ergibt.

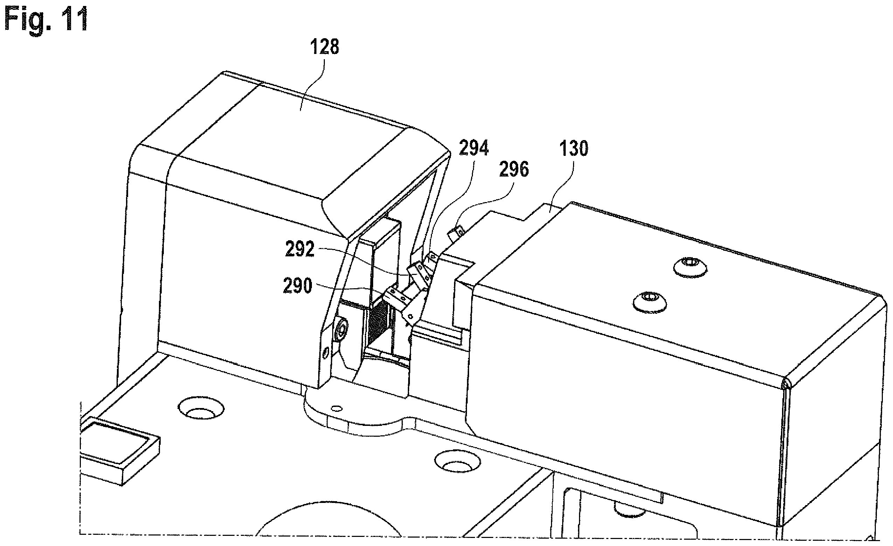

Nach einem Ausführungsbeispiel der Fig. 11 erstreckt sich jeweils entlang jeder Längsseitenfläche des Schiebers 113 eine jeweils zwei Schenkel 290, 292 bzw. 294, 296 umfassende Greifeinrichtung, zwischen denen ein Durchgangsknoten, also im Ausführungsbeispiel die erste Verbindung 148 geklemmt wird, um sodann die Schweißung der zweiten Leiter durchzuführen.

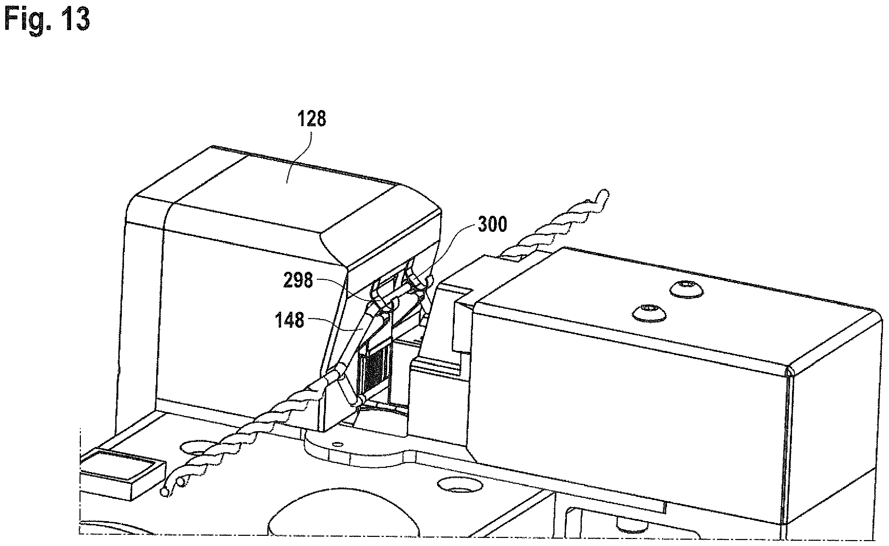

Aber auch von dem stationären Abschnitt 128 des Gehäuses 126 können Rückhalteeinrichtungen entsprechend der Ausgestaltungen der Fig. 9 bis 11 ausgehen. So sind den hakenförmigen Vorsprüngen 186, 188 federartige Klemmelemente 298, 300 zugeordnet, zwischen denen und den Oberseiten der Vorsprünge 186, 188 ein Durchgangsknoten geklemmt werden kann, wie dies der Fig. 13 zu entnehmen ist.

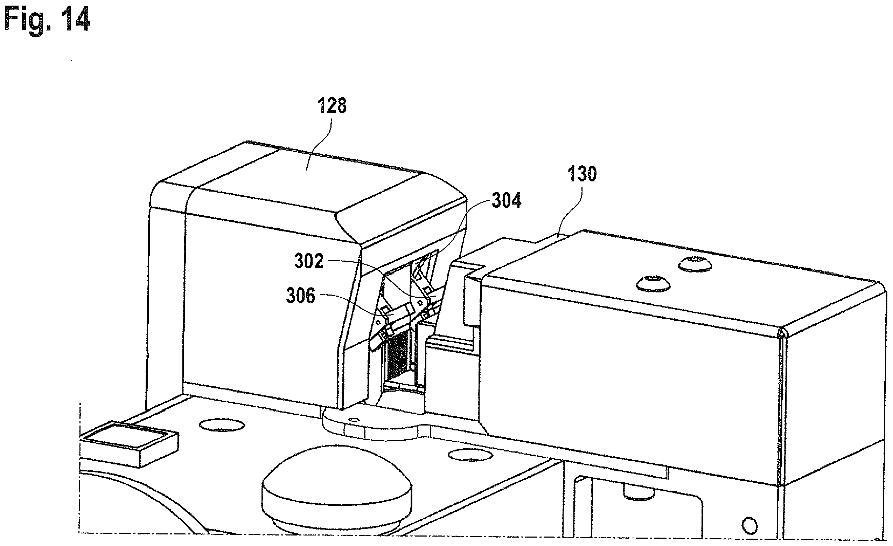

Fig. 14 sieht eine Greifeinrichtung als Rückhalteeinrichtung entsprechend der Fig. 11 vor, d.h. jeweils ein Paar zueinander verschwenkbarer Schenkel 302, 304 und 306 sowie ein weiterer nicht sichtbarer Schenkel sind aufeinanderzu verstellbar, um klemmend einen Durchgangsknoten aufzunehmen.

Anzumerken ist, dass das erfindungsgemäße Verfahren auch durchführbar ist, wenn mehr als zwei Verbindungen zu schweißen sind, also mehr als erste und zweite Leitungen geschweißt werden sollen. So kann die Rückhaltevorrichtung folglich so ausgebildet sein, dass mehrere Verbindungen, Durchgangsknoten aufgenommen werden. Auch bestünde die Möglichkeit, mehr als eine Rückhalteeinrichtung vorzusehen, um Verbindungen aufzunehmen, um diese von dem Verdichtungsraum fernzuhalten.

## Patentansprüche

1. Verfahren zum elektrisch leitenden Verbinden von ersten elektrischen Leitern (140, 142) sowie vorzugsweise mit diesen verdrillten zweiten elektrischen Leitern (144, 146) in einem querschnittsmäßig, insbesondere in Höhe und Breite, veränderbaren zumindest einen Seitenschieber (113), eine Sonotrode (114) und eine Gegenelektrode (115) aufweisenden Verdichtungsraum (121) mittels Ultraschallschweißens, wobei zunächst blanke Enden der ersten elektrischen Leiter in den Verdichtungsraum eingebracht und mittels Ultraschalleinwirkung zu einer ersten Verbindung (148) geschweißt werden und sodann nach Entnahme der ersten Verbindung aus dem Verdichtungsraum in diesen blanke Enden der zweiten elektrischen Leiter eingebracht und mittels Ultraschalleinwirkung zu einer zweiten Verbindung geschweißt werden,
**dadurch gekennzeichnet,**
**dass** vor dem Schweißen der zweiten Verbindung die erste Verbindung (148) einer Rückhalteeinrichtung (150, 152, 156, 158, 160, 162, 164, 166, 168, 178, 180, 186, 188) zugeführt wird.

2. Verfahren nach Anspruch 1, wobei der Verdichtungsraum (121) beim Schweißen von einem Gehäuse (128, 130), insbesondere Schallschutzgehäuse, umgeben wird, **dadurch gekennzeichnet,**
**dass** als die Rückhalteeinrichtung (150, 152, 156, 158, 160, 162, 164, 166, 168, 178, 180, 186, 188) eine solche ausgebildet wird, die innerhalb des Gehäuses vorgesehen ist.

3. Verfahren nach Anspruch 1 oder 2,
**dadurch gekennzeichnet,**
**dass** die Rückhalteeinrichtung (150, 152, 156, 158, 160, 162, 164, 166, 168, 178, 180, 186, 188) in oder an dem Seitenschieber (113), der Gegenelektrode (115) oder bei Vorhandensein eines Gehäuses am oder im Gehäuseinneren ausgebildet wird.

4. Anordnung zum stoffschlüssigen Verbinden erster Leiter (140, 142) zu einer ersten Schweißverbindung sowie zweiter Leiter (144, 146) zu einer zweiten Schweißverbindung, mittels Ultraschall, umfassend einen von zumindest einem Seitenschieber (113), einer Sonotrode (114) und einer Gegenelektrode (115) begrenzten Verdichtungsraum (121), der vorzugsweise während des Schweißens von einem insbesondere schallisolierenden Gehäuse (126, 128, 130) umgeben ist, **gekennzeichnet durch**
eine Schweißverbindungsrückhalteeinrichtung (150, 152, 156, 158, 160, 162, 164, 166, 168, 178, 180, 186, 188) zur Aufnahme der durch Schweißen blanker Enden der ersten Leiter (140, 142) hergestellten ersten Schweißverbindung (148) während des Schweißens blanker Enden der zweiten Leiter (144, 146) zu der zweiten Schweißverbindung, wobei die Schweißverbindungsrückhalteeinrichtung (150, 152, 156, 158, 160, 162, 164, 166, 168, 178, 180, 186, 188) in oder an dem Seitenschieber (113) oder der Gegenelektrode (115) ausgebildet ist, oder bei Vorhandensein des Gehäuses (126, 128, 130) von dessen Innerem oder von einem das Gehäuse bodenseitig verschließenden Element (134) ausgeht, wobei die Schweißverbindungsrückhalteeinrichtung (150, 152, 156, 158, 160, 162, 164, 166, 168, 178, 180, 186, 188) ausgebildet ist als zumindest ein Element aus der Gruppe Aussparung, Vorsprung, Bügel, Haken, Klemmeinrichtung, Greifelement, Feder, Niederhalter.

5. Anordnung nach Anspruch 4,
**dadurch gekennzeichnet,**
**dass** in zur Bodenfläche des Verdichtungsraums (121) fernliegender Oberseite (1113) des Seitenschiebers (113) eine Aussparung (150, 152, 156, 158, 160, 162, 164) als Schweißverbindungsrückhalteeinrichtung ausgebildet ist.

6. Anordnung nach Anspruch 5,
**dadurch gekennzeichnet,**
**dass** die Aussparung (150, 152, 156, 158, 160, 162, 164) in senkrecht zu den Verdichtungsraum (121) begrenzender Stirnfläche des Seitenschiebers (113) verlaufendem Schnitt eine Geometrie in Form eines Dreiecks, insbesondere ungleichschenkligen Dreiecks, eines Rechtecks, eines Kreisabschnitts, insbesondere Halbkreises, oder eine oder mehrere Kombinationen dieser aufweist.

7. Anordnung nach Anspruch 5 oder 6,
**dadurch gekennzeichnet,**
**dass** die Aussparung als Hinterschnitt (164) ausgebildet ist.

8. Anordnung nach Anspruch 4,
**dadurch gekennzeichnet,**
**dass** über der Oberseite (1113) des Seitenschiebers (113) ein im Schnitt vorzugsweise rechteckförmiger oder L-förmiger Vorsprung (166, 168) vorsteht, der verdichtungsraumseitig insbesondere bündig in die den Verdichtungsraum (121) begrenzende Stirnfläche übergeht.

9. Anordnung nach Anspruch 4,
**dadurch gekennzeichnet,**
**dass** in dem Seitenschieber (113) zugewandter Stirnfläche (172) der Gegenelektrode (115) eine Aussparung (176) als die Schweißverbindungsrückhalteeinrichtung ausgebildet oder von der Stirnfläche ein Vorsprung (174) als die Schweißverbindungsrückhalteinrichtung ausgeht.

10. Anordnung nach Anspruch 9,
**dadurch gekennzeichnet,**
**dass** der Vorsprung (174) der Gegenelektrode (115) bündig in den Verdichtungsraum begrenzende Fläche der Gegenelektrode als Abschnitt dieser übergeht.

11. Anordnung nach einem der Ansprüche 4 bis 10,
**dadurch gekennzeichnet,**
**dass** das Gehäuse (126) einen insbesondere stationären ersten Abschnitt (128) und ein zu diesem verstellbaren, beim Schweißen vorzugsweise an diesem anliegenden zweiten Abschnitt (130) umfasst, und dass von dem ersten oder dem zweiten Abschnitt zumindest ein insbesondere haken- oder bügelförmiger Vorsprung (178, 180, 182, 184, 186, 188) als die Schweißverbindungsrückhalteeinrichtung ausgeht.

12. Anordnung nach Anspruch 11,
**dadurch gekennzeichnet,**
**dass** von dem ersten oder dem zweiten Abschnitt (128, 130) des Gehäuses (126) zwei zueinander beabstandete Schweißverbindungsrückhaltereinrichtungen (178, 180, 182, 184, 186, 188) ausgehen, die bei geschlossenem Gehäuse sich auf gegenüberliegenden Seiten des Verdichtungsraums (121) erstrecken.

13. Anordnung nach Anspruch 4,
**dadurch gekennzeichnet,**
**dass** die Anordnung mehr als eine Schweißverbindungsrückhalteeinrichtung (150, 152, 156, 158, 160, 162, 164, 166, 168, 178, 180, 186, 188) aufweist.

## Claims

1. Method for electrically conductive connecting of first electrical conductors (140, 142) and second electrical conductors (144, 146) preferably twisted therearound in a compression chamber (121) variable in cross-section, in particular in height and width, and having at least one lateral slide (113), a sonotrode (114) and a counter electrode (115), by means of ultrasonic welding, wherein bare ends of the first electrical conductors initially being inserted into the compression chamber and welded by means of ultrasonic effect into a first connection (148) and then after removal of the first connection from the compression chamber bare ends of the second electrical conductors being inserted thereinto and welded by means of ultrasonic effect into a second connection,
**characterized in that,**
before welding of the second connection the first connection (148) is passed to a retaining device (150, 152, 156, 158, 160, 162, 164, 166, 168, 178, 180, 186, 188).

2. The method according to Claim 1, wherein, during the welding, the compression chamber (121) is surrounded by a housing (128, 130), in particular a sound protection housing,
**characterized in that,**
as the retaining device (150, 152, 156, 158, 160, 162, 164, 166, 168, 178, 180, 186, 188), such a retaining device is formed, which is provided within the housing.

3. The method according to Claim 1 or 2,
**characterized in that,**
the retaining device (150, 152, 156, 158, 160, 162, 164, 166, 168, 178, 180, 186, 188) is formed in or on the lateral slide (113), the counter electrode (115) or, in the case of presence of a housing, on or in the housing interior.

4. An arrangement for materially bonded connecting of first conductors (140, 142) into a first welded connection and of second conductors (144, 146) into a second welded connection by means of ultrasonic, comprising a compression chamber (121) limited by at least one lateral slide (113), a sonotrode (114) and a counter electrode (115) and preferably surrounded during welding by an in particular sound-insulating housing (126, 128, 130),
**characterized in that,**
a welded connection retaining device (150, 152, 156, 158, 160, 162, 164, 166, 168, 178, 180, 186, 188) for receiving the first welded connection (148) made by welding bare ends of the first conductors (140, 142) during welding of bare ends of the second conductors (144, 146) into the second welded connection, the welded connection retaining device (150, 152, 156, 158, 160, 162, 164, 166, 168, 178, 180, 186, 188) being provided in or on the lateral slide (113) or the counter electrode (115) or, if the housing (126, 128, 130) is present, extending from its interior or from an element (134) closing the housing on the bottom, the welded connection retaining device (150, 152, 156,158,160, 162, 164,166, 168, 178, 180, 186, 188) being designed as at least one element from the group recess, projection, bar, hook, clamping device, gripping element, spring, holddown.

5. The arrangement according to Claim 4,
**characterized in that,**
in the upper side (1113) of the lateral slide (113) located at a distance from the bottom surface of the compression chamber (121), a recess (150, 152, 156, 158, 160, 162, 164) is formed as welded connection retaining device.

6. The arrangement according to Claim 5,
**characterized in that,**
in a cross section perpendicular to the front surface of the lateral slide (113) delimiting the compression chamber (121), the recess (150, 152, 156, 158, 160, 162, 164) has a geometry in the form of a triangle, in particular a non-isosceles triangle, a rectangle, a segment of a circle, in particular a semicircle, or one or more combinations thereof.

7. The arrangement according to at least one of Claims 5 to 6,
**characterized in that,**
the recess is formed as an undercut (164).

8. The arrangement according to Claim 4,
**characterized in that,**
above the upper side (1113) of the lateral slide (113), a protrusion (166, 168), which is preferably rectangular or L-shaped in cross section, protrudes, which, on the compression chamber-side transitions in particular flush into the front surface delimiting the compression chamber (121).

9. The arrangement according to Claim 4,
**characterized in that,**
in the front surface (172) of the counter electrode (115) facing the lateral slide (113), a recess (176) is formed as the welded connection retaining device, or a protrusion (174), as welded connection retaining device, starts from the front surface.

10. The arrangement according to Claim 9,
**characterized in that,**
the protrusion (174) of the counter electrode (115) transitions flush into the surface of the counter electrode delimiting the compression chamber, as a section of same.

11. The arrangement according to one of Claims 4 to 10,
**characterized in that,**
the housing (126) comprises a first section (128), in particular a stationary first section, and a second section (130) which is adjustable with respect to said first section and which, during the welding, preferably adjoins said first section, and **in that**, starting from the first or the second section is at least one protrusion (178, 180, 182, 184, 186, 188), in particular hook- or bracket-shaped, as the welded connection retaining device.

12. The arrangement according to Claim 11,
**characterized in that,**
starting from the first or the second section (128, 130) of the housing (126) are two mutually spaced welded connection retaining devices (178, 180, 182, 184, 186, 188), which, when the housing is closed, extend on opposite sides of the compression chamber (121).

13. The arrangement according to Claim 4,
**characterized in that,**
the arrangement comprises more than one welded connection retaining device (150, 152, 156, 158, 160, 162, 164, 166, 168, 178, 180, 186, 188).

## Revendications

1. Procédé pour raccorder de manière électroconductrice des premiers conducteurs électriques (140, 142) ainsi que des seconds conducteurs électriques (144, 146) torsadés avec ceux-ci dans une chambre de compression (121) variable en section, notamment en hauteur et largeur, présentant au moins une coulisse latérale (113), une sonotrode (114) et une contre-électrode (115), au moyen d'un soudage par ultrasons, sachant que tout d'abord des extrémités dénudées des premiers conducteurs électriques sont insérées dans la chambre de compression et sont soudées en une première liaison (148) sous l'effet d'ultrasons et ensuite, après retrait de la première liaison hors de la chambre de compression, des extrémités dénudées des seconds conducteurs électriques sont insérées dans celle-ci et sont soudées en une seconde liaison sous l'effet d'ultrasons.
**caractérisé en ce**
**qu'**avant le soudage de la seconde liaison, la première liaison (148) est admise dans un dispositif de maintien (150, 152, 156, 158, 160, 162, 164, 166, 168, 178, 180,186, 188).

2. Procédé selon la revendication 1, sachant que la chambre de compression (121) lors du soudage est entourée par un caisson (128, 130), notamment un caisson d'insonorisation, **caractérisé en ce**
**qu'**est conçu comme dispositif de maintien (150, 152, 156, 158, 160, 162, 164, 166, 168, 178, 180, 186, 188) un dispositif prévu à l'intérieur du caisson.

3. Procédé selon la revendication 1 ou 2,
**caractérisé en ce**
**que** le dispositif de maintien (150, 152, 156, 158, 160, 162, 164, 166, 168, 178, 180, 186, 188) est constitué dans ou contre la coulisse latérale (113), la contre-électrode (115) ou, en présence d'un caisson, contre ou à l'intérieur du caisson.

4. Ensemble pour la liaison des premiers conducteurs (140, 142) par assemblage de matière pour former une première liaison soudée ainsi que des seconds conducteurs (144, 146) pour former une seconde liaison soudée, au moyen d'ultrasons, comprenant une chambre de compression (121) délimitée par au moins une coulisse latérale (113), une sonotrode (114) et une contre-électrode (115), laquelle chambre est entourée de préférence pendant le soudage, par un caisson notamment insonorisant (126, 128, 130).
**caractérisé en ce**
**qu'**un dispositif de maintien des liaisons soudées (150, 152, 156, 158, 160, 162, 164, 166, 168, 178, 180, 186, 188) pour loger la première liaison soudée (148) fabriquée par soudage des extrémités dénudées des premiers conducteurs (140, 142), pendant le soudage des extrémités dénudées des seconds conducteurs (144, 146) pour former la seconde liaison soudée, sachant que le dispositif de maintien des liaisons soudées (150,152,156,158,160,162,164,166,168,178, 180, 186, 188) est constitué dans ou contre la coulisse latérale (113) ou la contre-électrode (115), ou, en présence du caisson (126, 128, 130) part de son intérieur ou d'un élément (134) fermant le caisson, côté fond, sachant que le dispositif de maintien des liaisons soudées (150, 152, 156, 158, 160, 162, 164, 166, 168, 178, 180, 186, 188) est conçu sous forme d'au moins un élément du groupe évidement, saillie, étrier, crochet, pince, élément de préhension, ressort, serre-flan.

5. Système selon la revendication 4,
**caractérisé en ce**
**qu'**un évidement (150, 152, 156, 158, 160, 162, 164) est conçu sous forme de dispositif de maintien des liaisons soudées dans le côté supérieur (1113) de la coulisse latérale (113), éloigné du fond de la chambre de compression (121).

6. Système selon la revendication 5,
**caractérisé en ce**
**que** l'évidement (150, 152, 156, 158, 160, 162, 164) en coupe s'étendant perpendiculairement à la face avant de la coulisse latérale (113), délimitant la chambre de compression (121) présente une géométrie en forme de triangle, notamment de triangle isocèle, de rectangulaire, de section de cercle, notamment de demi-cercle, ou d'une ou de plusieurs combinaisons de ceux-ci.

7. Système selon la revendication 5 ou 6,
**caractérisé en ce**
**que** l'évidement est conçu sous forme de contre-dépouille (164).

8. Système selon la revendication 4,
**caractérisé en ce**
**qu'**une saillie (166, 168) de préférence de forme rectangulaire ou en forme de L en coupe dépasse de la face supérieure (1113) de la coulisse latérale (113), laquelle saillie se prolonge, côté chambre de compression, notamment à fleur, dans la face avant délimitant la chambre de compression (121).

9. Système selon la revendication 4,
**caractérisé en ce**
**que** dans la face avant (172) de la contre-électrode (115) tournée vers la coulisse latérale (113), un évidement (176) est conçu sous forme de dispositif de maintien des liaisons soudées ou qu'une saillie (174) part de la face avant, comme dispositif de maintien des liaisons soudées.

10. Système selon la revendication 9,
**caractérisé en ce**
**que** la saillie (174) de la contre-électrode (115) se prolonge à fleur dans la face de la contre-électrode, délimitant la chambre de compression, comme section de celle-ci.

11. Système selon une des revendications 4 à 10,
**caractérisé en ce**
**que** le caisson (126) comprend une première section (128) notamment fixe et une seconde section (130) réglable par rapport à celle-ci, reposant de préférence sur celle-ci lors du soudage, et qu'au moins une saillie (178, 180, 182, 184, 186, 188) servant de dispositif de maintien de liaisons soudées, notamment sous forme de crochet ou d'étrier, part de la première ou de la seconde section.

12. Système selon la revendication 11,
**caractérisé en ce**
**que** partent de la première ou de la seconde section (128, 130) du caisson (126) deux dispositifs de maintien des liaisons soudées (178, 180, 182, 184, 186, 188) éloignés l'un de l'autre, qui s'étendent sur des côtés opposés de la chambre de compression (121) lorsque le caisson est fermé.

13. Système selon la revendication 4,
**caractérisé en ce**
**que** le système présente plus d'un dispositif de maintien des liaisons soudées (150, 152, 156, 158, 160, 162, 164, 166, 168, 178, 180, 186, 188).
